# EUROPEAN PATENT APPLICATION

(11) **EP 3 809 008 A1**
(43) Date of publication of application: **21.04.2021**
(21) Application number: 20195703.2
(22) Date of filing: 11.09.2020
(51) Int. Cl.: F16D 65/00

(54) **SCREW THREAD BIDIRECTIONALLY DRIVEN DISC BRAKE PISTON RESETTING TOOL**

(30) Priority: 17.10.2019 CN 201910988288
(71) Applicant: Nuevo Products Development Co., Ltd., Changhua City, Changhua County (TW); YO LEE AUTO CO., LTD., Tainan City (TW)
(72) Inventor: TSENG, Chao-Ching, Changhua City, Changhua County (TW); WANG, Kun-Wang, Tainan City (TW)
(74) Representative: Cabinet Chaillot

(57) **Abstract**

A screw thread bidirectionally driven disc brake piston resetting tool, which comprises a main body (10), a first clamping plate (20) and a second clamping plate (30), wherein both sides of the main body are adjacent to the first clamping plate and the second clamping plate respectively. A driving piece and a tubular revolving part (11) are pivoted in the main body. The driving piece drives the revolving part to revolve. The revolving part is screwed on a first connecting piece (50) and a second connecting piece (60) respectively. The first connecting piece and the second connecting piece are linked with the first clamping plate (20) and the second clamping plate (30) respectively, shifting oppositely.

The distance between the first clamping plate and the second clamping plate can be increased without increasing the thickness of the main body, it is applicable to piston resetting push-back operation for disc brakes of different sizes.

## Description

### BACKGROUND OF INVENTION

### 1. Field of the Invention

The present invention relates generally to a special tool for vehicle repair; and more particularly to the innovative structure type of a screw thread bidirectionally driven disc brake piston resetting tool.

### 2. Description of Related Art

A disc brake comprises a brake disc and a caliper, wherein the piston of the caliper pushes the brake pad to shift toward the brake disc, so as to reduce the speed of the brake disc, to change the brake pad, the piston must be pressed to return the piston into the caliper.

For different brake discs, the space width of the caliper for the brake disc to pass through is different, the known tool for pushing the piston back into the caliper is difficult to be used for resetting the piston for the calipers of different sizes.

### SUMMARY OF THE INVENTION

The primary object of the present invention is to provide a screw thread bidirectionally driven disc brake piston resetting tool, the technical problem to be solved is to break through how to develop a new type of disc brake piston resetting tool performing piston resetting for calipers of different sizes.

Based on said object, the technical characteristic of problem solving of the present invention is that the screw thread bidirectionally driven disc brake piston resetting tool comprises a main body, a first clamping plate and a second clamping plate, wherein both sides of the main body are adjacent to the first clamping plate and the second clamping plate respectively, a driving piece and a tubular revolving part are pivoted in the main body, the driving piece is coupled with the revolving part, the driving piece drives the revolving part to revolve.

A first screw thread section and a second screw thread section are formed inside the revolving part. The turning direction of the first screw thread section is opposite to that of the second screw thread section. The revolving part is screwed on a first connecting piece through the first screw thread section. The revolving part is screwed on a second connecting piece through the second screw thread section. One end of the first connecting piece extends out of the main body and contacts the first clamping plate. One end of the second connecting piece extends out of the main body and contacts the second clamping plate. A first trough is formed axially outside the first connecting piece. A second trough is formed axially outside the second connecting piece. The main body is provided with a first bulge and a second bulge. The first bulge is embedded in the first trough. The second bulge is embedded in the second trough. The first connecting piece and the second connecting piece are linked with the first clamping plate and the second clamping plate respectively, shifting oppositely.

In terms of the main effect and advantages of the present invention, the distance between the first clamping plate and the second clamping plate can be increased without increasing the thickness of the main body, it is applicable to piston resetting operation for disc brakes of different sizes.

### BRIEF DESCRIPTION OF THE DRAWINGS

Fig.1 is the stereogram of Embodiment 1 of the present invention.
Fig.2 is the three-dimensional exploded diagram of Embodiment 1 of the present invention.
Fig.3 is the sectional view of principal part in Embodiment 1 of the present invention, presenting the 3-3 section of Fig.1.
Fig.4 is the sectional view of principal part in actuation in Embodiment 1 of the present invention.
Fig.5 is the sectional view of principal part in actuation in Embodiment 2 of the present invention.
Fig.6 is the sectional view of principal part in actuation in Embodiment 3 of the present invention.
Fig.7 is the three-dimensional exploded diagram of the second connecting piece and the second side plate in Embodiment 4 of the present invention.

### DETAILED DESCRIPTION OF THE INVENTION

The figures show several embodiments of the screw thread bidirectionally driven disc brake piston resetting tool of the present invention, but the embodiments are for illustration only, the patent application is not limited to this structure.

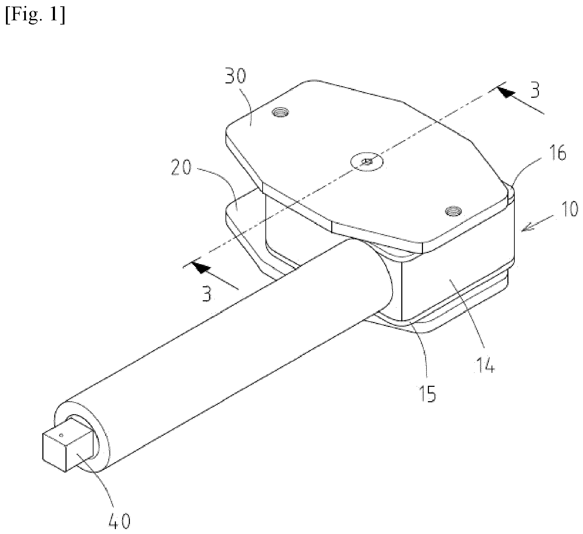

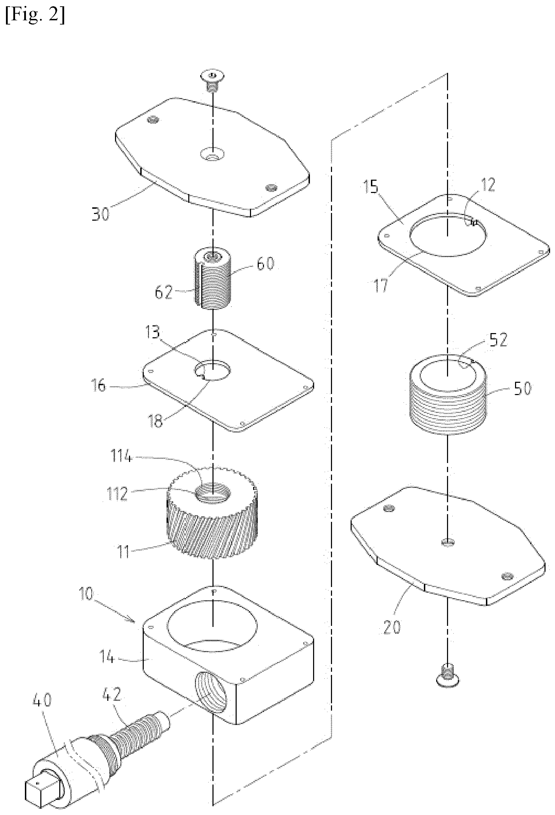

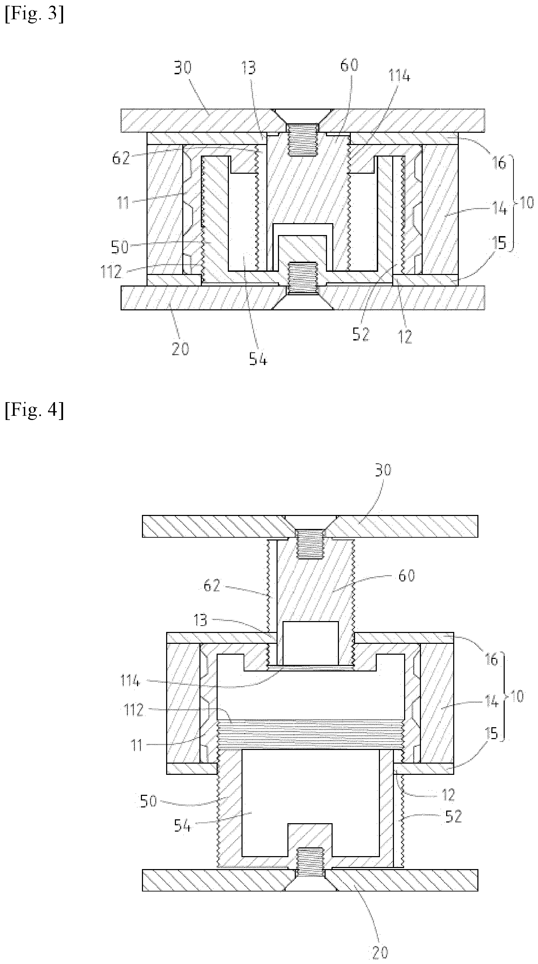

As shown in Fig.1 to Fig.4, Embodiment 1 comprises a main body 10, a first clamping plate 20, a second clamping plate 30 and an operating rod 40. Wherein both sides of the main body 10 are adjacent to the first clamping plate 20 and the second clamping plate 30 respectively. A driving piece 42 and a tubular revolving part 11 are pivoted inside the main body 10. The driving piece 42 is coupled with the revolving part 11, so that the driving piece 42 drives the revolving part 11 to revolve. One end of the operating rod 40 is coupled with the driving piece 42. In this case, the driving piece 42 is a worm, the revolving part 11 is a worm wheel, and the driving piece 42 engages with the revolving part 11.

The operating rod 40 is an optional component. The operating rod 40 and the driving piece 42 can be two components separate from each other. To turn the driving piece 42, the operating rod 40 shown in this case can be used, or other forms of tools can be put in the main body 10 to link the driving piece 42, so that the driving piece 42 can be turned.

A first screw thread section 112 and a second screw thread section 114 are formed in the revolving part 11. The turning direction of the first screw thread section 112 is opposite to that of the second screw thread section 114. The revolving part 11 is screwed on a first connecting piece 50 through the first screw thread section 112. The revolving part 11 is screwed on a second connecting piece 60 through the second screw thread section 114. Hereby, when the revolving part 11 revolves against the first connecting piece 50 and the second connecting piece 60, the first connecting piece 50 and the second connecting piece 60 shift oppositely.

One end of the first connecting piece 50 extends out of the main body 10 and contacts the first clamping plate 20. One end of the second connecting piece 60 extends out of the main body 10 and contacts the second clamping plate 30. A first trough 52 is formed axially outside the first connecting piece 50. A second trough 62 is formed axially outside the second connecting piece 60. The main body 10 is provided with a first bulge 12 and a second bulge 13. The first bulge 12 is embedded in the first trough 52. The second bulge 13 is embedded in the second trough 62. The first connecting piece 50 and the second connecting piece 60 are linked with the first clamping plate 20 and the second clamping plate 30 respectively, shifting oppositely.

Based on said structural composition type and technical characteristics, when the present invention performs piston push-back reset operation of disc brake cylinder, the operating rod 40 is operated, the driving piece 42 drives the revolving part 11 to revolve. As the first bulge 12 restricts the first connecting piece 50, the first connecting piece 50 will not revolve. The second bulge 13 restricts the second connecting piece 60, the second connecting piece 60 will not revolve, so that the first clamping plate 20 and the second clamping plate 30 will not revolve, and the first clamping plate 20 or the second clamping plate 30 is prevented from shifting randomly to lose the initial alignment. When the revolving part 11 revolves, the revolving part 11 drives the first connecting piece 50 and the second connecting piece 60 to shift against each other, so that the first clamping plate 20 and the second clamping plate 30 shift oppositely in the direction far from or close to the main body 10, the distance between the first clamping plate 20 and the second clamping plate 30 can be increased without increasing the thickness of the main body 10. The present invention can be applied to the piston resetting push-back operation for disc brakes of different sizes. In addition, when the revolving part 11 revolves, the first bulge 12 and the second bulge 13 prevent the first connecting piece 50 and the second connecting piece 60 from revolving with the revolving part 11 respectively, it is unnecessary to apply an external force to suppress the first clamping plate 20 and the second clamping plate 30. The first clamping plate 20 and the second clamping plate 30 can reciprocate linearly, the handiness of piston push-back reset operation is enhanced.

A holding chamber 54 is formed axially in the first connecting piece 50. The holding chamber 54 is open to the second connecting piece 60. When the first connecting piece 50 and the second connecting piece 60 go near to each other toward the main body 10, the second connecting piece 60 can enter the holding chamber 54, so that the first connecting piece 50 telescopes the second connecting piece 60, the length of the space of the main body 10 for holding the first connecting piece 50 and the second connecting piece 60 is reduced, so that the thickness of the main body 10 is further reduced.

The main body 10 comprises a base 14 with a first side plate 15 and a second side plate 16 on both sides. The first side plate 15 is adjacent to the first clamping plate 20. The second side plate 16 is adjacent to the second clamping plate 30. The first side plate 15 penetrates through a first punch hole 17, the second side plate 16 penetrates through a second punch hole 18. The first connecting piece 50 passes through the first punch hole 17, the second connecting piece 60 passes through the second punch hole 18. The first bulge 12 is formed on the inner edge of the first punch hole 17, the second bulge 13 is formed on the inner edge of the second punch hole 18. Hereby, the first side plate 15 and the second side plate 16 can restrict the revolving part 11 respectively, so that the revolving part 11 is located in the base 14, and the revolving part 11, the first connecting piece 50 and the second connecting piece 60 are easy to be fixed to the main body 10.

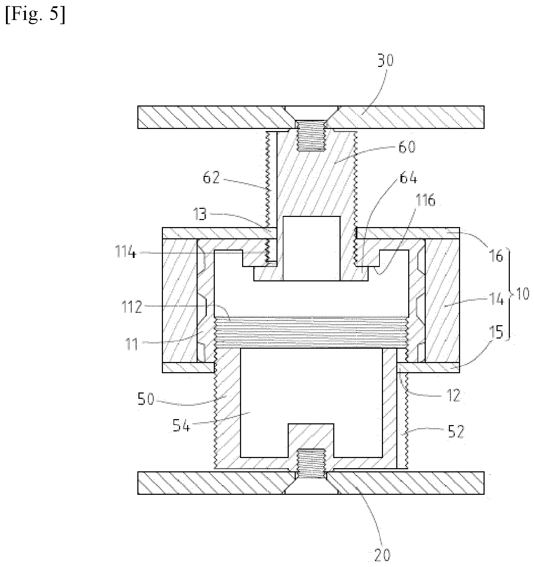

As shown in Fig.5, the main difference of Embodiment 2 from Embodiment 1 is that a disc part 64 is expanded radially at one end of the second connecting piece 60 far from the second clamping plate 30. An annular stopping face 116 is formed at one end of the second screw thread section 114 inside the revolving part 11 far from the second clamping plate 30. The stopping face 116 stops the disc part 64, so as to restrict the stroke when the second connecting piece 60 and the second clamping plate 30 shift far from the main body 10.

As the first connecting piece 50 and the second connecting piece 60 are screwed in the revolving part 11 respectively, when the second connecting piece 60 cannot move far from the main body 10 anymore, the second connecting piece 60 restricts the revolving part 11 relatively, the revolving part 11 cannot revolve continuously in the direction making the first connecting piece 50 and the second connecting piece 60 shift far from each other oppositely, the stroke when the first connecting piece 50 and the first clamping plate 20 shift far from the main body 10 is restricted, preventing the first connecting piece 50 and the second connecting piece 60 from excessively shifting far from the main body 10, so that the screwing of the first connecting piece 50 and the second connecting piece 60 in the revolving part 11 is guaranteed.

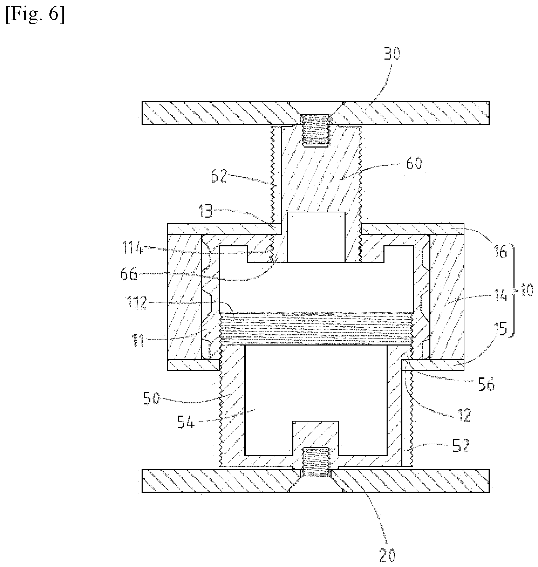

As shown in Fig.6, the difference of Embodiment 3 from Embodiment 1 is that a first limiting portion 56 is formed at one end of the first trough 52 of the first connecting piece 50 far from the first clamping plate 20, the first bulge 12 stops the first limiting portion 56 relatively, so as to restrict the stroke when the first clamping plate 20 shifts far from the main body 10. A second limiting portion 66 is formed at one end of the second trough 62 of the second connecting piece 60 far from the second clamping plate 30. The second bulge 13 stops the second limiting portion 66 relatively, so as to restrict the stroke when the second clamping plate 30 shifts far from the main body 10.

The relative composition of the first limiting portion 56 and the first bulge 12 and that of the second limiting portion 66 and the second bulge 13 can restrict the stroke when the first clamping plate 20 and the second clamping plate 30 shift far from the main body 10, and the screwing of the first connecting piece 50 and the second connecting piece 60 in the revolving part 11 is guaranteed, and one of the first limiting portion 56 and the second limiting portion 66 can be selected as required.

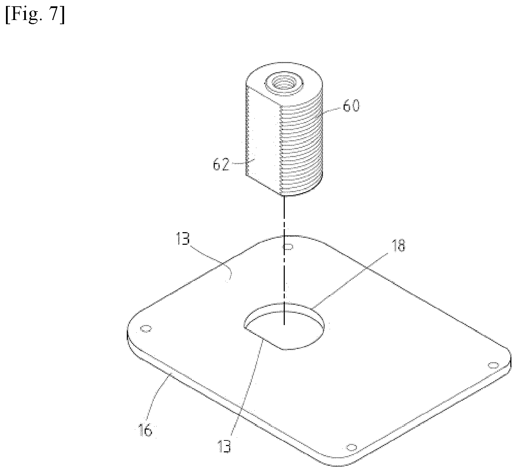

As shown in Fig.7, the difference of Embodiment 4 from Embodiment 1 is that the second trough 62 of the second connecting piece 60 sinks towards the axis from the outer margin of the second connecting piece 60 to form a plane. The second bulge 13 projects towards the axis from the inner edge of the second punch hole 18 to form a plane, and the second bulge 13 contacts the second trough 62 relatively.

## Claims

1. A screw thread bidirectionally driven disc brake piston resetting tool, comprising a main body (10), a first clamping plate (20) and a second clamping plate (30), wherein both sides of the main body (10) are adjacent to the first clamping plate (20) and the second clamping plate (30) respectively, a driving piece (42) and a tubular revolving part (11) are pivoted in the main body (10), the driving piece (42) is coupled with the revolving part (11), the driving piece (42) drives the revolving part (11) to revolve;
a first screw thread section (112) and a second screw thread section (114) are formed inside the revolving part (11); the turning direction of the first screw thread section (112) is opposite to that of the second screw thread section (114); the revolving part (11) is screwed on a first connecting piece (50) through the first screw thread section (112); the revolving part (11) is screwed on a second connecting piece (60) through the second screw thread section (114); one end of the first connecting piece (50) extends out of the main body (10) and contacts the first clamping plate (20); one end of the second connecting piece (60) extends out of the main body (10) and contacts the second clamping plate (30); a first trough (52) is formed axially outside the first connecting piece (50); a second trough (62) is formed axially outside the second connecting piece (60); the main body (10) is provided with a first bulge (12) and a second bulge (13); the first bulge (12) is embedded in the first trough (52); the second bulge (13) is embedded in the second trough (62); the first connecting piece (50) and the second connecting piece (60) are linked with the first clamping plate (20) and the second clamping plate (30) respectively, shifting oppositely.

2. The screw thread bidirectionally driven disc brake piston resetting tool defined in Claim 1, wherein the driving piece (42) is a worm, the revolving part (11) is a worm wheel, the driving piece (42) engages with the revolving part (11).

3. The screw thread bidirectionally driven disc brake piston resetting tool defined in Claim 1, wherein a holding chamber (54) is formed axially in the first connecting piece (50), the holding chamber (54) is open to the second connecting piece (60), so that the second connecting piece (60) enters the holding chamber (54) relatively.

4. The screw thread bidirectionally driven disc brake piston resetting tool defined in Claim 1, wherein the main body (10) comprises a base (14) with a first side plate (15) and a second side plate (16) on both sides; the first side plate (15) is adjacent to the first clamping plate (20); the second side plate (16) is adjacent to the second clamping plate (30); the first side plate (15) penetrates through a first punch hole (17), the second side plate (16) penetrates through a second punch hole (18); the first connecting piece (50) passes through the first punch hole (17), the second connecting piece (60) passes through the second punch hole (18), and the first bulge (12) is formed on the inner edge of the first punch hole (17), the second bulge (13) is formed on the inner edge of the second punch hole (18).

5. The screw thread bidirectionally driven disc brake piston resetting tool defined in any of Claims 1 to 4, wherein a disc part (64) is expanded radially at one end of the second connecting piece (60) far from the second clamping plate (30), an annular stopping face (116) is formed at one end of the second screw thread section (114) inside the revolving part (11) far from the second clamping plate (30); the stopping face (116) stops the disc part (64), restricting the stroke when the second clamping plate (30) shifts far from the main body (10).

6. The screw thread bidirectionally driven disc brake piston resetting tool defined in any of Claims 1 to 4, wherein a first limiting portion (56) is formed at one end of the first trough (52) of the first connecting piece (50) far from the first clamping plate (20), the first bulge (12) stops the first limiting portion (56) relatively, restricting the stroke when the first clamping plate (20) shifts far from the main body (10).

7. The screw thread bidirectionally driven disc brake piston resetting tool defined in any of Claims 1 to 4, wherein a second limiting portion (66) is formed at one end of the second trough (62) of the second connecting piece (60) far from the second clamping plate (30), the second bulge (13) stops the second limiting portion (66) relatively, restricting the stroke when the second clamping plate (30) shifts far from the main body (10).

8. The screw thread bidirectionally driven disc brake piston resetting tool defined in any of Claims 1 to 4, including an operating rod (40), one end of the operating rod (40) is coupled with the driving piece (42).
